# FASCICULE DE BREVET EUROPEEN

(11) **EP 3 708 044 B1**
(45) Date de publication et mention de la délivrance du brevet: **06.10.2021**
(21) Numéro de dépôt: 20161848.5
(22) Date de dépôt: 09.03.2020
(51) Int. Cl.: A47J 37/06, A47J 37/10

(54) **KIT D'ÉLÉMENTS D'ASSEMBLAGE D'UNE CUVE D'APPAREIL DE CUISSON DU TYPE FRITEUSE À AIR CHAUD**
KIT AUS ELEMENTEN ZUR MONTAGE EINES BEHÄLTERS EINES KOCHGERÄTS, WIE EIN HEISSLUFTFRITTIERGERÄT
KIT OF ELEMENTS FOR ASSEMBLING A CONTAINER OF A COOKING APPARATUS SUCH AS A HOT AIR FRYER

(30) Priorité: 11.03.2019 FR 1902474
(43) Date de publication de la demande: 16.09.2020
(73) Titulaire: SEB S.A., 69130 Ecully (FR)
(72) Inventeur: PETITALLOT, Johann, 21000 DIJON (FR)
(74) Mandataire: SEB Développement

(56) Documents cités:
- WO-A1-2018/050838
- WO-A1-2018/060331
- US-A- 5 768 980
- US-A1- 2011 088 566
- US-A1- 2013 200 081

## Description

### Domaine technique

La présente invention concerne les appareils de cuisson, plus précisément un appareil de cuisson du type friteuse à air chaud qui permet de réaliser une cuisson des aliments au moyen d'une circulation d'air chaud dans une enceinte de cuisson dudit appareil, ladite cuisson étant réalisée en utilisant très peu d'huile, voire pas du tout d'huile.

L'invention a pour objectif principal de permettre de cuisiner des recettes diverses et variées au moyen de l'appareil de cuisson.

### Etat de la technique

Un appareil de cuisson du type friteuse à air chaud est bien connu de l'homme du métier. Un tel appareil de cuisson permet de réduire fortement la quantité de matière grasse, voire de la supprimer complètement, lors de la cuisson des aliments qui s'effectue simplement grâce à de l'air chaud qui circule dans une enceinte de cuisson contenant les aliments à cuire. Ainsi, il est possible de consommer des aliments plus diététiques, ces aliments pouvant être d'origine végétale ou animale, par exemple des frites, des légumes, de la viande ou du poisson.

Un tel appareil de cuisson comprend généralement une coque et une cuve amovible qui permet la réception des aliments à cuire. Une fois les aliments disposés dans la cuve, la coque de l'appareil de cuisson peut être fermée pour former une enceinte de cuisson incorporant la cuve et les aliments. De l'air chaud est ensuite pulsé dans cette enceinte de cuisson au moyen d'un dispositif de chauffe et d'un dispositif de circulation d'air, la circulation de l'air chaud dans l'enceinte assurant ainsi la cuisson des aliments.

Le dispositif de circulation d'air comprend un ventilateur qui permet une circulation de l'air en boucle à l'intérieur de la coque de l'appareil de cuisson de sorte à acheminer cet air jusqu'à l'enceinte de cuisson en passant par le dispositif de chauffe, l'air chauffé circulant dans la cuve avant de sortir de l'enceinte de cuisson et d'effectuer un nouveau cycle de circulation dans la coque de l'appareil de cuisson.

Sur les appareils de cuisson à air chaud traditionnels, la cuve permet uniquement de réaliser certaines cuissons d'aliments, ce qui limite les recettes réalisables et l'utilisation de l'appareil de cuisson.

Pour augmenter les types de recettes réalisables au moyen d'un même appareil de cuisson à air chaud, certains de ces appareils de cuisson comportent plusieurs cuves adaptées pour la réalisation de cuissons différentes, comme le prévoit notamment l'appareil de cuisson décrit dans la demande internationale de brevet WO2018050838A1 ou WO2018060331A1. Cette mise en oeuvre augmente considérablement le coût de l'appareil de cuisson et l'encombrement des diverses cuves, celles n'étant pas utilisées devant être rangées séparément de l'appareil de cuisson, par exemple dans un placard ou meuble de cuisine.

Le document US5768980 décrit un moule de mise en forme utilisée en pâtisserie. Ce moule divulgue un élément de contour avec deux éléments de fond interchangeables. Cependant, ce moule n'est pas intégré à un appareil de cuisson de type friteuse à air chaud.

### Exposé de l'invention

La présente invention pallie les inconvénients précités en concevant un appareil de cuisson de type friteuse à air chaud selon la revendication 1.

Ainsi, l'appareil de cuisson selon l'invention permet la formation de l'une ou l'autre d'au moins deux cuves ayant des fonctionnalités différentes de cuisson adaptées aux diverses préparations alimentaires à cuisiner, l'élément de contour étant le même pour toutes les cuves pouvant être constituées, seul changeant l'élément de fond qui est adapté en fonction de la cuisson à réaliser. Cela permet donc de réduire la quantité de matière utilisée pour la mise en œuvre des cuves qui ont un élément de contour commun et des éléments de fond interchangeables et adaptés aux différents types de préparations alimentaires à cuisiner. En outre, l'encombrement des éléments de fond est considérablement réduit en comparaison de l'encombrement d'autant de cuves monoblocs tel que prévu dans la demande internationale de brevet WO2018050838A1, ce qui simplifie leur rangement dans un meuble de cuisine lorsqu'ils ne sont pas utilisés. Aussi, l'élément de contour se présente comme un cylindre qui est fendu sur sa longueur, la fente constituant l'ouverture sur l'élément de contour et permettant la formation des deux portions d'extrémité latérales séparées par ladite fente. En outre, ce cylindre fendu présente dans un plan de coupe transversal une section cylindrique, lesdits moyens d'assemblage permettant de réunir les deux portions d'extrémité latérales, soit en les juxtaposant soit en les chevauchant, de sorte à réduire ladite section et, ainsi, resserrer sur lui-même ledit cylindre. Cette conception permet avantageusement à l'élément de contour de venir étrangler ou cercler l'élément de fond en vue de leur assemblage. Ce guidage permet de mettre convenablement en forme l'élément de contour lors de l'assemblage entre les deux portions d'extrémité latérales.

Selon une réalisation de l'appareil de cuisson objet de l'invention, celui-ci comprend un premier élément de fond comportant une surface munie d'une ouverture centrale et une portion périphérique. Cette ouverture centrale permet notamment d'assurer un accouplement entre un moteur d'entraînement disposé en-dessous de l'élément de fond et un outil rotatif disposé au-dessus de l'élément de fond, dans la cuve qui est formée par ledit premier élément de fond assemblé avec l'élément de contour. L'outil rotatif précité est notamment du type élément de brassage, mais d'autres outils pourraient être envisagés. De préférence, la portion périphérique est incurvée ; la forme incurvée est adaptée à l'outil rotatif pour que celui-ci racle convenablement ledit élément de fond. D'autres formes pourraient être envisagées pour cette portion périphérique, par exemple une forme en équerre. A titre d'exemple, la formation d'une cuve au moyen d'un tel premier élément de fond et utilisant un élément de brassage permet à l'appareil de cuisson à air chaud de cuisiner des frites ou des légumes en morceaux en les brassant de sorte à homogénéiser la cuisson de ces aliments.

Selon une réalisation de l'appareil de cuisson objet de l'invention, celui-ci comprend un second élément de fond comportant une surface entière, c'est-à-dire sans ouverture centrale, et une portion périphérique. De préférence, la surface entière est plane, mais on pourrait prévoir des variantes de surfaces entières présentant par exemple des ondulations ou des stries. De préférence, la portion périphérique est en équerre, mais d'autres formes pourraient être envisagées pour cette portion périphérique, par exemple une forme incurvée. A titre d'exemple, la formation d'une cuve au moyen d'un tel second élément de fond présentant une surface entière plane et une portion périphérique en équerre permet à l'appareil de cuisson à air chaud de cuisiner des gâteaux, des viandes, des volailles, des pizzas, des tartes ou des quiches.

De préférence, selon cette réalisation précitée de l'appareil de cuisson, les moyens d'assemblage comportent un système d'ouverture-fermeture à grenouillère agencé sur les deux portions d'extrémités latérales de l'élément de contour.

De préférence, selon cette réalisation précitée de l'appareil de cuisson, un système d'encastrement est agencé entre un bord périphérique inférieur sur l'élément de contour et un bord périphérique supérieur sur chaque élément de fond. Lors de l'assemblage entre les deux portions d'extrémité latérales de l'élément de contour, le resserrage de cet élément de contour permet au bord inférieur dudit élément de contour de s'encastrer dans le bord périphérique de l'élément de fond. De préférence, le bord périphérique inférieur de l'élément de contour est recourbé vers le haut et le bord périphérique supérieur de chaque élément de fond est recourbé vers le bas, lesdits bords périphériques étant en outre recourbés dans des sens opposés de manière à être disposés en regard l'un de l'autre et à s'encastrer l'un dans l'autre lorsqu'une cuve est formée avec l'élément de contour et l'un des éléments de fond. Selon une première réalisation, le bord périphérique inférieur de l'élément de contour est orienté du côté interne dudit élément de contour et le bord périphérique supérieur de l'élément de fond est orienté du côté externe dudit élément de fond lorsqu'une cuve est formée avec l'élément de contour et l'un des éléments de fond. Selon une seconde réalisation, le bord périphérique inférieur de l'élément de contour est orienté du côté externe dudit élément de contour et le bord périphérique supérieur de l'élément de fond est orienté du côté interne dudit élément de fond lorsqu'une cuve est formée avec l'élément de contour et l'un des éléments de fond.

D'autres variantes de l'appareil de cuisson objet de l'invention sont envisageables, notamment quant à la mise en œuvre de l'élément de contour et des moyens d'assemblage entre l'élément de contour et l'un ou l'autre des au moins deux éléments de fond. En outre, un système de vissage est agencé entre ledit élément de contour et chacun des éléments de fond interchangeables.

Selon l'appareil de cuisson objet de l'invention, celui-ci comprend une poignée de manipulation de la cuve formée de l'élément de contour et d'un des éléments de fond. La poignée de manipulation est assemblée avec une portion supérieure de l'élément de contour. Cette poignée de manipulation est soit amovible par rapport à l'élément de contour soit fixée en permanence à l'élément de contour, selon deux variantes envisageables. Une telle poignée de manipulation facilite l'extraction de la cuve hors de l'appareil de cuisson lorsqu'elle est encore chaude, juste en fin de programme de cuisson.

Selon une réalisation de l'appareil de cuisson objet de l'invention, celui-ci comprend un élément d'arrêt qui descend le long d'une paroi interne de l'élément de contour et plonge vers l'élément de fond qui est assemblé avec ledit élément de contour. Un tel élément d'arrêt permet notamment de briser le mouvement rotatif de la préparation alimentaire dans la cuve, en particulier lors d'un brassage de cette préparation alimentaire. De préférence, cet élément d'arrêt est solidaire de la poignée de manipulation, mais on pourrait prévoir son assemblage directement sur la paroi interne de l'élément de contour. En outre, cet élément d'arrêt est souple ou rigide, selon deux variantes possibles.

Selon une réalisation de l'appareil de cuisson objet de l'invention, celui-ci comprend une poignée de manipulation qui est amovible par rapport à l'élément de contour et un second élément de fond tel que cité ci-avant, avec une surface entière. En outre, ladite surface entière du second élément de fond comprend une face inférieure munie d'un système d'accouplement apte à coopérer avec un moteur d'entraînement de l'appareil de cuisson. Cela permet de faire tourner la cuve dans l'enceinte de cuisson de l'appareil, afin d'améliorer l'homogénéité de cuisson des aliments du plat à cuisiner (un gâteau, une pizza, une tarte, une quiche ...) lorsque ceux-ci ne peuvent pas être brassés par un élément de brassage comme dans le cas d'une cuve munie d'un premier élément de fond.

Selon l'appareil de cuisson, l'élément de brassage est conçu pour être utilisé avec un premier élément de fond présentant les caractéristiques précitées.

Selon l'appareil de cuisson, le moteur d'entraînement est apte à entraîner une cuve comprenant un second élément de fond dont la surface entière présente sur sa face inférieure un système d'accouplement qui s'accouple avec le moteur d'entraînement lorsque la cuve munie dudit second élément de fond est en position fonctionnelle de cuisson dans ledit appareil de cuisson.

Les caractéristiques et avantages de l'invention apparaîtront à la lecture de la description suivante s'appuyant sur des figures, parmi lesquelles :
[Fig. 1] La figure 1 illustre en coupe une première cuve composée d'un élément de contour et d'un premier élément de fond, ladite cuve étant placée dans une coque d'un appareil de cuisson de type friteuse à air chaud ;
[Fig. 2] La figure 2 illustre en coupe une seconde cuve composée d'un élément de contour et d'un second élément de fond, ladite cuve étant placée dans ladite coque de l'appareil de cuisson en lieu et place de la cuve de la figure 1 ;
[Fig. 3] La figure 3 illustre en coupe la première cuve de la figure 1 ;
[Fig. 4] La figure 4 illustre en coupe la seconde cuve de la figure 2 ;
[Fig. 5] La figure 5 illustre partiellement un bord de guidage agencé en partie supérieure entre deux portions d'extrémité latérales d'un élément de contour ouvert ;
[Fig. 6] La figure 6 illustre partiellement un bord de guidage agencé en partie inférieure entre deux portions d'extrémité latérales d'un élément de contour ouvert ;
[Fig. 7] La figure 7 illustre un système d'ouverture-fermeture à grenouillère agencé sur les deux portions d'extrémités latérales d'un élément de contour ouvert ;
[Fig. 8] La figure 8 illustre un système d'encastrement agencé entre un bord périphérique inférieur d'un élément de contour et un bord périphérique d'un élément de fond, selon une première réalisation ;
[Fig. 9] La figure 9 illustre un système d'encastrement agencé entre un bord périphérique inférieur d'un élément de contour et un bord périphérique d'un élément de fond, selon une seconde réalisation.

Dans la suite de la description, les mêmes références seront utilisées pour décrire les caractéristiques identiques ou similaires selon les diverses variantes présentées.

La description suivante met surtout en exergue les caractéristiques relatives à l'appareil de cuisson à air chaud du type friteuse à air chaud et au kit d'éléments d'assemblage d'une cuve 1, 2 d'appareil de cuisson, qui sera dénommé par la suite « kit ». Les autres caractéristiques, propres à l'appareil de cuisson à air chaud, sont déjà connues et ne seront pas détaillées ci-après ; l'homme du métier pourra toutefois se référer à l'appareil de cuisson à air chaud commercialisé sous la dénomination ACTIFRY® par la demanderesse. Le kit d'éléments d'assemblage d'une cuve sera notamment mis en œuvre sur un tel appareil de cuisson à air chaud du type ACTIFRY®, ce qui n'exclut cependant pas la mise en œuvre dudit kit sur d'autres appareils de cuisson à air chaud présentant des caractéristiques similaires.

Un tel appareil de cuisson à air chaud comprend notamment une coque 13 apte à recevoir la cuve, un couvercle permettant la fermeture de la coque et la constitution d'une enceinte de cuisson dans laquelle est logée la cuve. L'appareil de cuisson comprend en outre un système de chauffe et un système de ventilation qui permettent de faire circuler l'air en boucle dans l'appareil de cuisson et de le chauffer avant qu'il pénètre dans l'enceinte de cuisson incorporant la cuve, l'air effectuant ensuite un nouveau cycle de circulation dans l'appareil de cuisson. L'appareil de cuisson à air chaud comprend aussi un moteur d'entraînement agencé dans un fond de la coque et permettant l'entraînement en rotation d'un élément de brassage qui est utilisé avec une cuve munie d'un fond ayant une surface ouverte en son centre, comme cela apparaîtra plus en détail ensuite. Une telle cuve et un tel élément de brassage, de même que le moteur d'entraînement, se retrouvent également sur l'appareil ACTIFRY®.

A la différence de l'appareil ACTIFRY® tel que commercialisé jusqu'à présent, c'est-à-dire avec une seule cuve monobloc, l'appareil de cuisson à air chaud selon l'invention prévoit ledit kit qui a pour intérêt de permettre la formation de différentes cuves 1, 2 présentant des fonctionnalités adaptées à plusieurs modes de cuisson et, ainsi, à la préparation de plats variés.

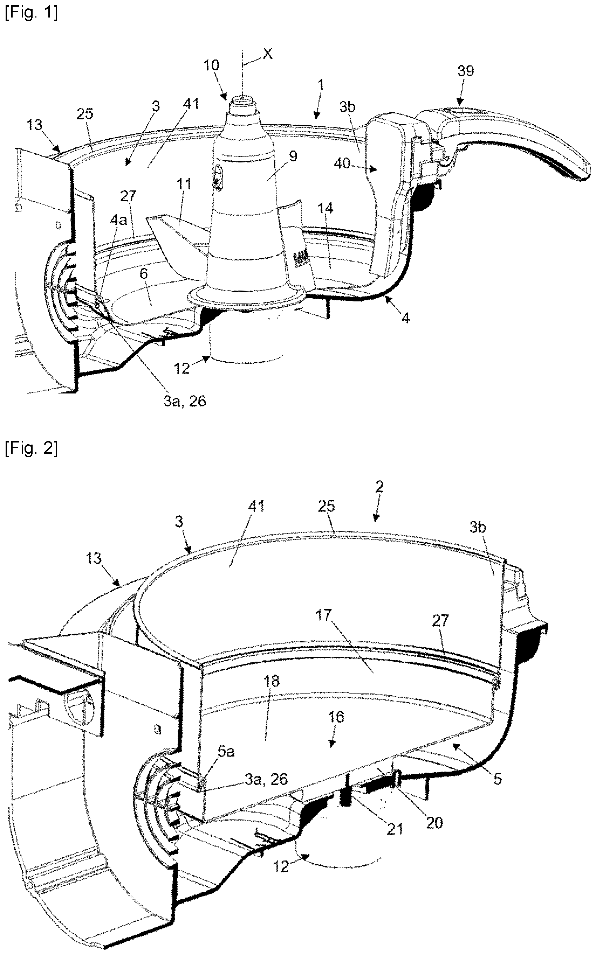

Sur les figures 1 à 4, le kit comprend un élément de contour 3 universel, c'est-à-dire commun à toute les cuves 1, 2 pouvant être mises en œuvre au moyen dudit kit. Le kit comprend en outre des éléments de fond 4, 5 propres aux différentes cuves 1, 2 pouvant être mises en œuvre au moyen dudit kit, ces éléments de fond 4, 5 étant interchangeables, c'est-à-dire qu'ils peuvent être assemblés l'un ou l'autre avec l'élément de contour 3.

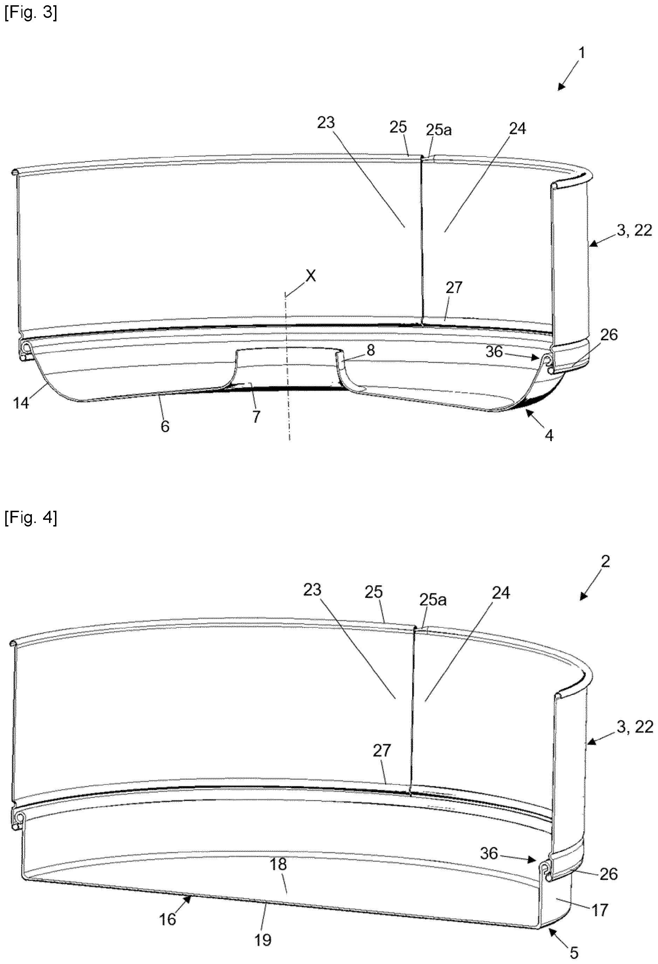

Sur les figures 1 et 3, le kit comprend un premier élément de fond 4 qui comprend une surface 6 munie en son centre d'une ouverture 7 qui est prolongée vers le haut par un col 8 sur lequel vient se fixer de manière amovible un tube de guidage (non illustré) formant un palier de roulement qui réceptionne à pivotement un moyeu 9 d'un élément de brassage 10 qui est prolongé radialement par une pale 11 de forme incurvée, ledit moyeu 9 étant accouplé à un moteur d'entraînement 12 de sorte à faire tourner l'élément de brassage 10 selon un axe X du moyeu 9, à l'intérieur de la cuve 1 qui reste fixe dans la coque 13 de l'appareil de cuisson à air chaud. Tel qu'illustré sur les figures 1 et 3, ce premier élément de fond 4 comprend une portion périphérique 14 qui prolonge ladite surface 6, cette portion périphérique 14 présentant une forme incurvée adaptée à la forme incurvée de la pale 11. Bien entendu, on pourrait envisager d'autres formes pour cette portion périphérique 14, en fonction de la forme de la pale 11 de l'élément de brassage 10. La constitution d'une telle cuve 1 permet notamment la cuisson de frites ou de légumes en morceaux qui peuvent être brassés dans ladite cuve 1 durant la cuisson au moyen de l'élément de brassage 10 afin de les cuire de manière homogène.

Sur les figures 2 et 4, le kit comprend en complément un second élément de fond 5 qui comprend une surface entière 16, c'est-à-dire sans l'ouverture 7 qui est présente sur le premier élément de fond 4. La portion périphérique 17 de ce second élément de fond 5 présente une forme en équerre vis-à-vis de ladite surface entière 16. La constitution d'une telle cuve 2 permet par exemple la cuisson de gâteaux, de viande, de volailles, de pizzas ou de quiches. Cette surface entière 16 est plane sur les figures 2 et 4 ; on pourrait toutefois prévoir une surface entière 16 présentant sur sa face supérieure 18 des ondulations ou des stries (non illustrées). Sur la figure 4, la surface entière 16 ne comporte aucun élément sur sa face inférieure 19, la cuve 2 mise en œuvre ayant dans ce cas vocation à rester fixe dans la coque 13 de l'appareil durant la cuisson. Sur la figure 2, la face inférieure 19 de cette surface entière 16 comprend un système d'accouplement 20 permettant l'entraînement en rotation de la cuve 2 selon l'axe X au moyen du moteur d'entraînement 12. Le système d'accouplement 20 est assujetti à ladite face inférieure 19 et s'accouple avec un arbre 21 du moteur d'entraînement 12 lors du positionnement de la cuve 2 dans la coque 13 de l'appareil. La rotation de la cuve 2 permettra d'homogénéiser la cuisson des aliments qui tournent avec ladite cuve 2.

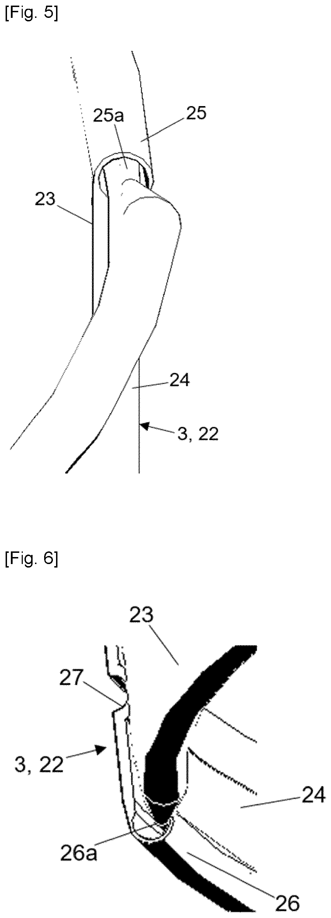

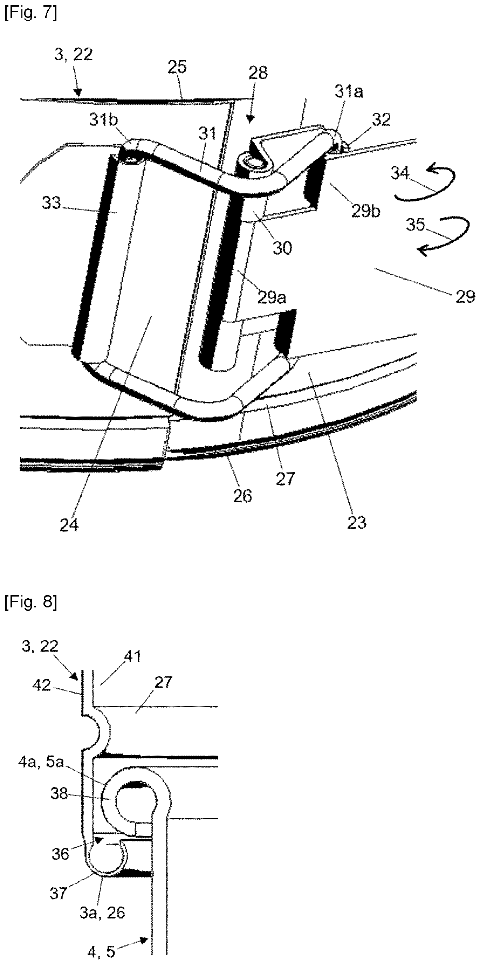

La description suivante porte sur l'assemblage de l'élément de contour 3 avec l'un ou l'autre des éléments de fond 4, 5 permettant la constitution de l'une ou l'autre des cuves 1, 2. En regard des figures 3 à 7, l'élément de contour 3 est formé d'un cylindre 22 de faible longueur ou hauteur. Ce cylindre 22 est ouvert sur sa longueur de sorte à présenter deux portions d'extrémité latérales 23, 24 qui sont réunies pour former ledit cylindre 22. Ce cylindre 22 comprend un système de guidage comportant un bord de guidage supérieur 25 et un bord de guidage inférieur 26, de même qu'un profil de guidage 27 légèrement décalé au-dessus du bord de guidage inférieur 26, lesquels permettent d'engager et de guider l'une dans l'autre les deux portions d'extrémité latérales 23, 24. Afin de pouvoir engager l'une dans l'autre les deux portions d'extrémité latérales 23, 24, une légère restriction de section 25a est prévue sur le bord de guidage supérieur 25, au niveau de l'une des deux portions d'extrémité latérales 23, 24 ; de même, une restriction de section 26a est prévue sur le bord de guidage inférieur 26. Tel qu'illustré en figure 7, un système d'ouverture-fermeture à grenouillère 28 est monté entre les deux portions d'extrémité latérales 23, 24 pour les maintenir assemblées et, ainsi, conserver l'élément de contour 3 assemblé avec l'un ou l'autre des deux éléments de fond 4, 5 lors de la formation de l'une ou l'autre des deux cuves 1, 2. La mise en œuvre d'un tel système d'ouverture-fermeture à grenouillère 28 est connue de l'homme du métier ; celui-ci comprend un levier 29 dont une extrémité 29a est articulée en liaison pivot 30 vis-à-vis de la première portion d'extrémité latérale 23 de l'élément de contour 3 et une pièce de transmission 31 dont une première extrémité 31a est articulée en liaison 32 vis-à-vis d'une partie intermédiaire 29b du levier 29 et dont une seconde extrémité 31b est articulée en liaison pivot 33 vis-à-vis de la seconde portion d'extrémité latérale 24 de l'élément de contour 3. L'actionnement du levier 29 dans le sens de la première flèche 34 permet d'exercer une traction entre les deux portions d'extrémité latérales 23, 24, ce qui permet d'insérer l'une dans l'autre en les guidant lesdites deux portions d'extrémité latérales 23, 24 de sorte à resserrer sur lui-même l'élément de contour 3 et réduire ainsi son diamètre - étant donné sa forme de cylindre 22. Inversement, l'actionnement du levier 29 dans le sens de la seconde flèche 35 permet d'exercer une poussée entre les deux portions d'extrémité latérales 23, 24 voire de relâcher la traction exercée entre celles-ci, ce qui permet de les écarter l'une de l'autre en les guidant de sorte à élargir et desserrer l'élément de contour 3 et augmenter son diamètre - étant donné sa forme de cylindre 22.

Tel qu'illustré sur les figures 3, 4 et 8, un système d'encastrement 36 est agencé entre le bord périphérique inférieur 3a de l'élément de contour 3 qui présente une forme en crochet 37 recourbée vers le haut - constituant également le bord de guidage inférieur 26 précité - et le bord périphérique supérieur 4a, 5a de l'élément de fond 4, 5 qui est utilisé pour former l'une des cuves 1, 2, ledit bord périphérique supérieur 4a, 5a présentant également une forme en crochet 38 recourbée vers le bas et en opposition par rapport à la forme en crochet 37 dudit bord périphérique inférieur 3a. Ainsi, le bord périphérique inférieur 3a de l'élément de contour 3 est en regard du bord périphérique supérieur 4a, 5a de l'élément de fond 4, 5 et vient s'engager dans celui-ci lorsque l'élément de contour 3 est desserré en actionnant le levier 29 dans le sens de la seconde flèche 35, tel qu'expliqué précédemment. Une fois le bord périphérique inférieur 3a de l'élément de contour 3 engagé dans le bord périphérique supérieur 4a, 5a de l'élément de fond 4, 5, le levier 29 est actionné dans le sens de la première flèche 34, tel qu'expliqué précédemment, ce qui permet de resserrer sur lui-même ledit élément de contour 3 et, ainsi, d'encastrer parfaitement et de manière étanche son bord périphérique inférieur 3a vis-à-vis du bord périphérique supérieur 4a, 5a de l'élément de fond 4, 5, la cuve 1, 2 étant ainsi formée. Le démontage de la cuve 1, 2 s'effectue à l'inverse, en desserrant l'élément de contour 3 pour donner du mou à son bord périphérique inférieur 3a vis-à-vis du bord périphérique supérieur 4a, 5a de l'élément de fond 4, 5, ce qui permet ensuite de désengager l'un de l'autre lesdits bords périphériques inférieur 3a et supérieur 4a, 5a.

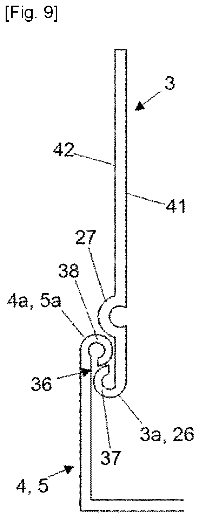

Sur la figure 8, le bord périphérique inférieur 3a de l'élément de contour 3 est orienté du côté interne dudit élément de contour 3 et le bord périphérique supérieur 4a, 5a de l'élément de fond 4, 5 est orienté du côté externe dudit élément de fond 4, 5. On pourrait toutefois envisager une autre variante de réalisation sur le même principe de fonctionnement, en prévoyant un bord périphérique inférieur 3a sur l'élément de contour 3 orienté du côté externe dudit élément de contour 3 et un bord périphérique supérieur 4a, 5a sur l'élément de fond 4, 5 orienté du côté interne dudit élément de fond 4, 5, comme l'illustre la figure 9.

Le kit comprend aussi une poignée de manipulation 39 qui, de préférence et tout particulièrement lorsque le second élément de fond 5 comprend le système d'accouplement 20 tel que précité, est fixée de manière amovible avec une portion supérieure 3b de l'élément de contour 3, comme l'illustrent les figures 1 et 2. En regard de cette figure 1, un élément d'arrêt 40 est assujetti à la poignée de manipulation 39, cet élément d'arrêt 40 s'étendant sur toute la hauteur de l'élément de contour 3 et descendant dans la portion périphérique 14 du premier élément de fond 4. De préférence, lorsque la mise en œuvre correspond à celle de la figure 8, cet élément d'arrêt 40 est souple, ce qui facilite sa mise en place sur la paroi interne 41 de l'élément de contour 3, malgré la présence du profil de guidage 27 et celle du bord périphérique supérieur 4a du premier élément de fond 4 du côté de ladite paroi interne 41. Lorsque la mise en œuvre correspond à la variante de la figure 9, on pourrait prévoir un élément d'arrêt 40 rigide puisque le profil de guidage 27 et le bord périphérique supérieur 4a du premier élément de fond 4 sont disposés du côté de la paroi externe 42 de l'élément de contour 3, ladite paroi interne 41 étant dans ce cas lisse et pouvant accueillir sans contrainte ledit élément d'arrêt malgré sa rigidité.

Des variantes d'élément de contour 3 et de moyens d'assemblage avec l'un ou l'autre des éléments de fond 4, 5 pourraient être envisagées dans le cadre de l'invention.

Le kit pourrait comporter des éléments de fond complémentaires aux deux éléments de fond 4, 5 décrits précédemment afin de constituer d'autres variantes de cuves adaptées à diverses cuissons.

Dans les exemples de réalisation décrits précédemment, l'élément de contour 3 et les éléments de fond 4, 5 ont une forme circulaire. D'autres formes pourraient être envisagées sans sortir du cadre de l'invention, par exemple une forme carrée ou ovale.

## Revendications

1. Appareil de cuisson de type friteuse à air chaud comprenant un système de chauffage, un système de ventilation, un moteur d'entraînement (12) apte à entraîner en rotation un élément de brassage (10), ledit élément de brassage (10) étant amovible, et un kit d'éléments d'assemblage d'une cuve (1, 2) d'appareil de cuisson du type friteuse à air chaud, comprenant un élément de contour (3), appareil de cuisson de type friteuse à air chaud **caractérisé en ce que** ledit kit d'éléments d'assemblage comprend au moins deux éléments de fond (4, 5) interchangeables présentant des fonctionnalités différentes et des moyens d'assemblage de l'élément de contour (3) avec un élément de fond parmi les au moins deux éléments de fond (4, 5) et **en ce que** l'élément de contour (3) est ouvert et présente deux portions d'extrémité latérales (23, 24), les moyens d'assemblage étant configurés pour réunir les deux portions d'extrémité latérales (23, 24) en resserrant sur lui-même ledit élément de contour, un système de guidage (25, 26, 27) étant agencé entre les deux portions d'extrémité latérales (23, 24) de l'élément de contour (3) de manière à les faire coulisser l'une vis-à-vis de l'autre durant le resserrage sur lui-même dudit élément de contour (3).

2. Appareil de cuisson selon la revendication 1, lequel comprend un premier élément de fond (4) comportant une surface (6) munie d'une ouverture (7) centrale et une portion périphérique (14), ladite portion périphérique (14) étant de préférence incurvée.

3. Appareil de cuisson selon l'une quelconque des revendications 1 ou 2, lequel comprend un second élément de fond (5) comportant une surface entière (16) et une portion périphérique (17), ladite surface entière (16) étant de préférence plane et ladite portion périphérique (17) étant de préférence en équerre.

4. Appareil de cuisson selon l'une quelconque des revendications 1 à 3, dans lequel les moyens d'assemblage comportent un système d'ouverture-fermeture à grenouillère (28) agencé sur les deux portions d'extrémités latérales (23, 24) de l'élément de contour (3).

5. Appareil de cuisson selon l'une quelconque des revendications 1 à 4, dans lequel un système d'encastrement (36) est agencé entre un bord périphérique inférieur (3a) sur l'élément de contour (3) et un bord périphérique supérieur (4a, 5a) sur chaque élément de fond (4, 5).

6. Appareil de cuisson selon la revendication 5, dans lequel le bord périphérique inférieur (3a) de l'élément de contour (3) est recourbé vers le haut et le bord périphérique supérieur (4a, 5a) de chaque élément de fond (4, 5) est recourbé vers le bas, lesdits bords périphériques (3a, 4a, 5a) étant recourbés dans des sens opposés de manière à être disposés en regard l'un de l'autre et à s'encastrer l'un dans l'autre lorsqu'une cuve (1, 2) est formée avec l'élément de contour (3) et l'un des éléments de fond (4, 5).

7. Appareil de cuisson selon la revendication 6, dans lequel le bord périphérique inférieur (3a) de l'élément de contour (3) est orienté du côté interne dudit élément de contour et le bord périphérique supérieur (4a, 5a) de l'élément de fond (4, 5) est orienté du côté externe dudit élément de fond lorsqu'une cuve (1, 2) est formée avec l'élément de contour (3) et l'un des éléments de fond (4, 5).

8. Appareil de cuisson selon la revendication 6, dans lequel le bord périphérique inférieur (3a) de l'élément de contour (3) est orienté du côté externe dudit élément de contour et le bord périphérique supérieur (4a, 5a) de l'élément de fond (4, 5) est orienté du côté interne dudit élément de fond lorsqu'une cuve (1, 2) est formée avec l'élément de contour (3) et l'un des éléments de fond (4, 5).

9. Appareil de cuisson selon l'une quelconque des revendications 1 à 8, lequel comprend une poignée de manipulation (39) de la cuve (1, 2) formée de l'élément de contour (3) et d'un des éléments de fond (4, 5), la poignée de manipulation (39) étant assemblée avec une portion supérieure (3b) de l'élément de contour (3).

10. Appareil de cuisson selon la revendication 9, dans lequel la poignée de manipulation (39) est amovible par rapport à l'élément de contour (3) ou bien fixée en permanence à l'élément de contour (3).

11. Appareil de cuisson selon l'une quelconque des revendications 1 à 10, lequel comprend un élément d'arrêt (40) qui descend le long d'une paroi interne (41) de l'élément de contour (3) et plonge vers l'élément de fond (4) qui est assemblé avec ledit élément de contour (3).

12. Appareil de cuisson selon la revendication 11 rattachée à l'une quelconque des revendications 9 ou 10, dans lequel l'élément d'arrêt (40) est solidaire de la poignée de manipulation (39).

13. Appareil de cuisson selon l'une quelconque des revendications 11 ou 12, dans lequel l'élément d'arrêt (40) est souple ou rigide.

14. Appareil de cuisson selon les revendications 10 et 9 rattachée à la revendication 3, dans lequel la poignée de manipulation (39) est amovible par rapport à l'élément de contour (3) et la surface entière (16) du second élément de fond (5) comprend une face inférieure (19) munie d'un système d'accouplement (20) apte à coopérer avec un moteur d'entraînement (12) de l'appareil de cuisson.

15. Appareil de cuisson selon la revendication 14, dans lequel ledit élément de brassage (10) est conçu pour être utilisé avec un premier élément de fond (4) présentant les caractéristiques du premier élément de fond (4) de la revendication 2.

16. Appareil de cuisson selon les revendications 14 et 15, dans lequel le moteur d'entraînement (12) est apte à entraîner une cuve (2) comprenant un second élément de fond (5) présentant les caractéristiques du second élément de fond (5) de la revendication 14, le système d'accouplement (20) s'accouplant avec le moteur d'entraînement (12) lorsque la cuve (2) munie du second élément de fond (5) est en position fonctionnelle de cuisson dans ledit appareil de cuisson.

## Patentansprüche

1. Gargerät vom Typ Heißluftfritteuse, das ein Heizsystem, ein Belüftungssystem, einen Antriebsmotor (12), der geeignet ist, ein Mischelement (10) in Drehung anzutreiben, wobei das Mischelement (10) abnehmbar ist, und einen Satz von Elementen zum Zusammenfügen eines Behälters (1, 2) für Gargerät vom Typ Heißluftfritteuse umfasst, der ein Konturelement (3) umfasst,
Gargerät vom Typ Heißluftfritteuse **dadurch gekennzeichnet, dass** der Satz von Elementen zum Zusammenfügen mindestens zwei austauschbare Bodenelemente (4, 5) umfasst, die unterschiedliche Funktionalitäten aufweisen, und Zusammenfügemittel des Konturelements (3) mit einem Bodenelement der mindestens zwei Bodenelemente (4, 5), und dass das Konturelement (3) offen ist und zwei seitliche Endabschnitte (23, 24) aufweist, wobei die Zusammenfügemittel konfiguriert sind, um die zwei seitlichen Endabschnitte (23, 24) zu vereinen, indem das Konturelement auf sich selbst angezogen wird, wobei ein Führungssystem (25, 26, 27) zwischen den zwei seitlichen Endabschnitten (23, 24) des Konturelements (3) derart eingerichtet ist, dass sie eines gegenüber dem anderen während des Anziehens auf sich selbst des Konturelements (3) gleiten.

2. Gargerät nach Anspruch 1, das ein erstes Bodenelement (4) umfasst, das eine Oberfläche (6) umfasst, die mit einer zentralen Öffnung (7) und einem Umfangsabschnitt (14) versehen ist, wobei der Umfangsabschnitt (14) vorzugsweise gekrümmt ist.

3. Gargerät nach einem der Ansprüche 1 oder 2, das ein zweites Bodenelement (5) umfasst, das eine vollständige Oberfläche (16) und einen Umfangsabschnitt (17) umfasst, wobei die vollständige Oberfläche (16) vorzugsweise flach ist, und der Umfangsabschnitt (17) vorzugsweise winkelig ist.

4. Gargerät nach einem der Ansprüche 1 bis 3, wobei die Zusammenfügemittel ein Schnallenverschluss-Öffnungs-Schließsystem (28) umfassen, das auf den zwei seitlichen Endabschnitten (23, 24) des Konturelements (3) eingerichtet ist.

5. Gargerät nach einem der Ansprüche 1 bis 4, wobei ein Einpassungssystem (36) zwischen einem unteren Umfangsrand (3a) auf dem Konturelement (3) und einem oberen Umfangsrand (4a, 5a) auf jedem Bodenelement (4, 5) eingerichtet ist.

6. Gargerät nach Anspruch 5, wobei der untere Umfangsrand (3a) des Konturelements (3) nach oben umgebogen ist, und der obere Umfangsrand (4a, 5a) jedes Bodenelements (4, 5) nach unten umgebogen ist, wobei die Umfangsränder (3a, 4a, 5a) in entgegengesetzte Richtungen derart umgebogen sind, dass sie einander gegenüber angeordnet sind und sich ineinander einpassen, wenn der Behälter (1, 2) mit dem Konturelement (3) und einem der Bodenelemente (4, 5) gebildet wird.

7. Gargerät nach Anspruch 6, wobei der untere Umfangsrand (3a) des Konturelements (3) zu der Innenseite des Konturelements gerichtet ist, und der obere Umfangsrand (4a, 5a) des Bodenelements (4, 5) zu der Außenseite des Bodenelements gerichtet ist, wenn ein Behälter (1, 2) mit dem Konturelement (3) und einem der Bodenelemente (4, 5) gebildet wird.

8. Gargerät nach Anspruch 6, wobei der untere Umfangsrand (3a) des Konturelements (3) zu der Außenseite des Konturelements gerichtet ist, und der obere Umfangsrand (4a, 5a) des Bodenelements (4, 5) zu der Innenseite des Bodenelements gerichtet ist, wenn ein Behälter (1, 2) mit dem Konturelement (3) und einem der Bodenelemente (4, 5) gebildet wird.

9. Gargerät nach einem der Ansprüche 1 bis 8, das einen Bedienungsgriff (39) des Behälters (1, 2) umfasst, der aus dem Konturelement (3) und einem der Bodenelemente (4, 5) gebildet ist, wobei der Bedienungsgriff (39) mit einem oberen Abschnitt (3b) des Konturelements (3) zusammengefügt ist.

10. Gargerät nach Anspruch 9, wobei der Bedienungsgriff (39) in Bezug auf das Konturelement (3) abnehmbar oder dauerhaft an dem Konturelement (3) befestigt ist.

11. Gargerät nach einem der Ansprüche 1 bis 10, das ein Sperrelement (40) umfasst, das entlang einer Innenwand (41) des Konturelements (3) nach unten fährt, und zu dem Bodenelement (4), das mit dem Konturelement (3) zusammengefügt ist, taucht.

12. Gargerät nach Anspruch 11, verbunden mit einem der Ansprüche 9 oder 10, wobei das Sperrelement (40) fest mit dem Bedienungsgriff (39) verbunden ist.

13. Gargerät nach einem der Ansprüche 11 oder 12, wobei das Sperrelement (40) biegsam oder starr ist.

14. Gargerät nach den Ansprüchen 10 und 9, verbunden mit Anspruch 3, wobei der Bedienungsgriff (39) in Bezug auf das Konturelement (3) abnehmbar ist, und die vollständige Oberfläche (16) des zweiten Bodenelements (5) eine untere Fläche (19) umfasst, die mit einem Kupplungssystem (20) versehen ist, das geeignet ist, um mit einem Antriebsmotor (12) des Gargeräts zusammenzuwirken.

15. Gargerät nach Anspruch 14, wobei das Mischelement (10) ausgelegt ist, um mit einem ersten Bodenelement (4), das die Merkmale des ersten Bodenelements (4) des Anspruchs 2 aufweist, zusammenzuwirken.

16. Gargerät nach einem der Ansprüche 14 und 15, wobei der Antriebsmotor (12) geeignet ist, einen Behälter (2) anzutreiben, der ein zweites Bodenelement (5) aufweist, das die Merkmale des zweiten Bodenelements (5) des Anspruchs 14 aufweist, wobei das Kupplungssystem (20) mit dem Antriebsmotor (12) koppelt, wenn der Behälter (2), der mit dem zweiten Bodenelement (5) versehen ist, in Garbetriebsposition in dem Gargerät ist.

## Claims

1. Cooking apparatus such as a hot air fryer comprising a heating system, a ventilation system, a drive motor (12) capable of rotating a stirring element (10), said stirring element (10) being removable, and a kit of elements for assembling a container (1, 2) of a cooking apparatus such as a hot air fryer, comprising an edge element (3), cooking apparatus such as a hot air fryer, **characterised in that** said kit of elements for assembling comprises at least two interchangeable bottom elements (4, 5) having different functionalities and means for assembling the edge element (3) with a bottom element from among the at least two bottom elements (4, 5) and **in that** the edge element (3) is open and has two side end portions (23, 24), the assembling means being configured to bring together the two side end portions (23, 24) by tightening on itself said edge element, a guiding system (25, 26, 27) being arranged between the two side end portions (23, 24) of the edge element (3) so as to make them slide opposite one another during the tightening on itself of said edge element (3).

2. Cooking apparatus according to claim 1, which comprises a first bottom element (4) comprising a surface (6) provided with a central opening (7) and a peripheral portion (14), said peripheral portion (14) being preferably curved.

3. Cooking apparatus according to any one of claims 1 or 2, which comprises a second bottom element (5) comprising a complete surface (16) and a peripheral portion (17), said complete surface (16) being preferably flat and said peripheral portion (17) being preferably square.

4. Cooking apparatus according to any one of claims 1 to 3, wherein the assembling means comprise an opening/closing clip system (28) arranged on the two side end portions (23, 24) of the edge element (3).

5. Cooking apparatus according to any one of claims 1 to 4, wherein a housing system (36) is arranged between a lower peripheral edge (3a) on the edge element (3) and an upper peripheral edge (4a, 5a) on each bottom element (4, 5).

6. Cooking apparatus according to claim 5, wherein the lower peripheral edge (3a) of the edge element (3) is curved upwards and the upper peripheral edge (4a, 5a) of each bottom element (4, 5) is curved downwards, said peripheral edges (3a, 4a, 5a) being curved in opposition directions so as to be disposed facing one another and to be housed in one another when a container (1, 2) is formed with the edge element (3) and one of the bottom elements (4, 5).

7. Cooking apparatus according to claim 6, wherein the lower peripheral edge (3a) of the edge element (3) is oriented on the inner side of said edge element and the upper peripheral edge (4a, 5a) of the bottom element (4, 5) is oriented on the outer side of said bottom element when a container (1, 2) is formed with the edge element (3) and one of the bottom elements (4, 5).

8. Cooking apparatus according to claim 6, wherein the lower peripheral edge (3a) of the edge element (3) is oriented on the outer side of said edge element and the upper peripheral edge (4a, 5a) of the bottom element (4, 5) is oriented on the inner side of said bottom element when a container (1, 2) is formed with the edge element (3) and one of the bottom elements (4, 5).

9. Cooking apparatus according to any one of claims 1 to 8, which comprises a handle (39) of the container (1, 2) formed of the edge element (3) and one of the bottom elements (4, 5), the handle (39) being assembled with an upper portion (3b) of the edge element (3).

10. Cooking apparatus according to claim 9, wherein the handle (39) is removable with respect to the edge element (3) or permanently fixed to the edge element (3).

11. Cooking apparatus according to any one of claims 1 to 10, which comprises a stop element (40) which descends along an inner wall (41) of the edge element (3) and immerses towards the bottom element (4) which is assembled with said edge element (3).

12. Cooking apparatus according to claim 11 connected to any one of claims 9 or 10, wherein the stop element (40) is integral with the handle (39).

13. Cooking apparatus according to any one of claims 11 or 12, wherein the stop element (40) is flexible or rigid.

14. Cooking apparatus according to claims 10 and 9 connected to claim 3, wherein the handle (39) is removable with respect to the edge element (3) and the complete surface (16) of the second bottom element (5) comprises a lower face (19) provided with a coupling system (20) capable of engaging with a drive motor (12) of the cooking apparatus.

15. Cooking apparatus according to claim 14, wherein said stirring element (10) is designed to be used with a first bottom element (4) having features of the first bottom element (4) of claim 2.

16. Cooking apparatus according to claims 14 and 15, wherein the drive motor (12) is capable of driving a container (2) comprising a second bottom element (5) having features of the second bottom element (5) of claim 14, the coupling system (20) being coupled with the drive motor (12) when the container (2) provided with the second bottom element (5) is in the functional cooking position in said cooking apparatus.
